# EUROPÄISCHE PATENTANMELDUNG

(11) **EP 4 246 261 A1**
(43) Veröffentlichungstag der Anmeldung: **20.09.2023**
(21) Anmeldenummer: 22162807.6
(22) Anmeldetag: 17.03.2022
(51) Int. Cl.: G05B 23/02

(54) **LEITSYSTEM FÜR EINE TECHNISCHE ANLAGE UND BETRIEBSVERFAHREN**

(71) Anmelder: Siemens Aktiengesellschaft, 80333 München (DE)
(72) Erfinder: Lutz, Benjamin, 76327 Pfinztal (DE)
(74) Vertreter: Siemens Patent Attorneys

(57) **Zusammenfassung**

Vorgeschlagen wird ein Leitsystem (10) für eine technische Anlage, insbesondere Fertigungs- oder Prozessanlage, das wenigstens einen Operator Station Server (12) und wenigstens einen mit dem Operator Station Server verbundenen Operator Station Client (11) umfasst, wobei der Operator Station Server (12) dazu ausgebildet ist, Visualisierungsinformationen an den Operator Station Client (11) zu übertragen, und wobei der Operator Station Client (11) dazu ausgebildet ist, anhand der Visualisierungsinformationen eine Visualisierung (1) für einen Operator der technischen Anlage zu erzeugen. Das Leitsystem (9) ist dadurch gekennzeichnet, dass das Leitsystem (10) dazu ausgebildet ist, zur Laufzeit der technischen Anlage einen Zustand der Visualisierung (1) zu einem ersten Zeitpunkt auf Veranlassung des Operators und/oder automatisiert bei einem Eintreten eines Ereignisses in der technischen Anlage zu erfassen und in einem Speicher (18) des Leitsystems (10) oder in einem cloudbasierten Speicher außerhalb des Leitsystems (10) zu hinterlegen.

## Beschreibung

Die Erfindung betrifft ein Leitsystem für eine technische Anlage, insbesondere Fertigungs- oder Prozessanlage. Außerdem betrifft die Erfindung ein Verfahren zum Betreiben eines Leitsystems einer technischen Anlage.

Für die Bedienung und Beobachtung verfahrenstechnischer Anlagen werden Operatoren dynamisierte Anlagenbilder und unterschiedliche grafische Ansichten zur Darstellung von Trendverläufen, Alarmsequenzen oder Zuständen von Prozessobjekten angeboten. In Anlagenbildern können Operatoren weitere Fenster für Analysen oder zur Eingabe von Stellwerten öffnen. Je nach Tätigkeit kann ein Operator eine Vielzahl von Fenstern geöffnet haben und gleichzeitig auch mehrere Eingaben tätigen. Wird der Operator nun auf Grund eines Ereignisses noch während seiner ausgeübten Tätigkeit unterbrochen - z.B. um einen wichtigen Alarm zu behandeln - so hat er Mühe nach der Unterbrechung zu seiner vorherigen Tätigkeit zurückzukehren (das vorherige Anlagenbild, Faceplates, Fenster, usw. wiederherstellen), um diese auch abzuschließen.

In der EP 3 876 046 A1 ist ein Leitsystem einer technischen Anlage offenbart, welches eine Anpassungen einer durch einen Operator Station Client erfolgten Darbietung von Visualisierungsinformationen durch einen Operator zu einer Laufzeit der technischen Anlage ermöglicht.

Der Erfindung liegt die Aufgabe zugrunde, ein Leitsystem für eine technische Anlage anzugeben, welches die Effizienz und die Flexibilität einer Bedienung und Beobachtung der technischen Anlage erhöht.

Diese Aufgabe wird gelöst durch Leitsystem für eine technische Anlage mit den Merkmalen des Anspruchs 1. Außerdem wird die Aufgabe gelöst durch ein Verfahren zum Betreiben eines Leitsystems einer technischen Anlage gemäß Anspruch 8. Außerdem wird die Aufgabe gelöst durch ein Verfahren zum Betreiben eines Leitsystems einer technischen Anlage gemäß Anspruch 9. Vorteilhafte Weiterbildungen ergeben sich aus den abhängigen Ansprüchen.

Ein erfindungsgemäßes Leitsystem umfasst wenigstens einen Operator Station Server und wenigstens einen mit dem Operator Station Server verbundenen Operator Station Client. Dabei ist der Operator Station Server dazu ausgebildet ist, Visualisierungsinformationen an den Operator Station Client zu übertragen. Der Operator Station Client ist dazu ausgebildet, anhand der Visualisierungsinformationen eine Visualisierung für einen Operator der technischen Anlage zu erzeugen.

Das erfindungsgemäße Leitsystem ist dadurch gekennzeichnet, dass das Leitsystem dazu ausgebildet ist, zur Laufzeit der technischen Anlage einen Zustand der Visualisierung zu einem ersten Zeitpunkt auf Veranlassung des Operators und/oder automatisiert bei einem Eintreten eines Ereignisses in der technischen Anlage zu erfassen und in einem Speicher des Leitsystems oder in einem cloudbasierten Speicher außerhalb des Leitsystems zu hinterlegen. Bevorzugt ist der Speicher dabei auf dem Operator Station Server des Leitsystems hinterlegt.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem Leitsystem wird im vorliegenden Kontext ein computergestütztes, technisches System verstanden, das Funktionalitäten zum Darstellen, Bedienen und Leiten der verfahrenstechnischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber hinaus kann das Leitsystem u.a. Mittel zur Visualisierung der verfahrenstechnischen Anlage und zu einem Engineering aufweisen. Das Leitsystem kann optional auch weitere Recheneinheiten für komplexere Regelungen und Systeme zur Datenspeicherung und -verarbeitung umfassen.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage zur Visualisierung an sogenannte Operator Station Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen.

Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Ein Operator der technischen Anlage kann über den Operator Station Client, welcher beispielsweise ein Tablet, ein Smartphone, ein Personal Computer oder dergleichen sein kann, zum Zwecke eines Bedienens und Beobachtens der technischen Anlage auf den Operator Station Server zugreifen.

Unter einer Visualisierung wird vorliegend die grafische Darbietung verstanden, die für den Operator durch den Operator Station Client erfolgt. In der Regel verfügt der Operator Station Client über entsprechende Funktionalitäten, einschlägige Visualisierungsinformationen, die er vom Operator Station Server erhält, zur Erzeugung der beabsichtigten Visualisierung zu nutzen. Dabei kann die Visualisierung allgemein in an sich bekannter Weise Anlagenbilder, grafische Fenster mit Verlaufsanzeigen von Messwerten, Meldungsanzeigen, grafische Objekte, die technische Objekte der technischen Anlage repräsentieren, und dgl. umfassen. Im Falle einer Prozessanlage kann solch ein Anlagenbild beispielsweise grafische Repräsentationen von Pumpen, Ventilen, Tanks, Rohrleitungen, Brennkammern oder dergleichen umfassen. Die grafischen Repräsentationen können dabei aktuelle Prozessmesswerte, Statuswerte, (Alarm-)Meldungen oder dergleichen umfassen.

Das erfindungsgemäße Leitsystem ist dazu ausgebildet, zur Laufzeit der technischen Anlage, d.h. während eines Betriebes der technischen Anlage, zu einem ersten Zeitpunkt einen Zustand der Visualisierung zu erfassen. Mit dem Begriff "Zustand" ist dabei die aktuelle, dem Operator dargebotene grafische Wiedergabe gemeint. Diese kann eine zu dem ersten Zeitpunkt erfolgende grafische Wiedergabe eines Anlagenbildes der technischen Anlage, einer Trendanzeige eines Messwertes aus der technischen Anlage, einer nicht gesicherte Eingabe des Operators in einem Textfeld, eines von dem Operator eingestellter Stellwert eines Reglers und/oder einer Meldefolgeanzeige umfassen. Dabei kann zu jedem grafischen Fenster, zu jedem sonstigen Objekt und dgl. die tatsächliche Größe auf der Ausgabe des Operator Station Clients erfasst werden (beispielsweise 200 x 100 Pixel oder 5% x 5% des Ausgabebildes). Ebenfalls kann eine Anordnung / Position der vorgenannten Bestandteile der Visualisierung als "Zustand" erfasst werden. Das Leitsystem ist dazu ausgebildet, den Zustand der Visualisierung in einem Speicher direkt innerhalb oder, cloudbasiert, außerhalb des Leitsystems abzulegen. Die Erfassung und die Ablage werden entweder manuell von einem Operator der technischen Anlage und/oder automatisiert beim Eintreten eines (oder mehrerer) Ereignisse getriggert.

Der erfasste Zustand der Visualisierung kann zu Zwecken einer späteren Wiederherstellung der Visualisierung von dem Operator verwendet werden. Bevorzugt ist das Leitsystem dazu ausgebildet ist, zu einem zweiten, von dem ersten verschiedenen Zeitpunkt den Zustand der Visualisierung aus dem Speicher abzurufen und die zu dem zweiten Zeitpunkt aktuell dem Operator durch den Operator Station Client dargebotene Visualisierung in den aus dem Speicher abgerufenen Zustand zu bringen. Der Operator kann somit jederzeit aus unterschiedlichen Gründen seine gegenwärtige Tätigkeit unterbrechen und auch wieder unterbrechungsfrei zu dieser zurückkehren. Damit gehen ein effizientes und flexibles Bedienen und Beobachten der technischen Anlage einher.

Dabei kann das Leitsystem dazu ausgebildet sein, den Abruf der Visualisierung aus dem Speicher und die Aktualisierung der Visualisierung zu dem zweiten Zeitpunkt auf eine Anforderung des Operators hin vorzunehmen. Es kann aber auch dazu ausgebildet sein, den Abruf der Visualisierung aus dem Speicher und die Aktualisierung der Visualisierung zu dem zweiten Zeitpunkt automatisiert nach dem Ablauf einer bestimmten Zeitspanne vorzunehmen, wobei das Leitsystem vorzugsweise dazu ausgebildet ist, vor der Aktualisierung eine Abfrage an den Operator zu erzeugen, ob die Aktualisierung vorgenommen werden soll.

Der in dem Speicher hinterlegte Zustand kann aber auch für ein späteres Audit Trail verwendet werden, da das erfindungsgemäße Leitsystem, gerade beim Auftreten einer Alarmmeldung als auslösendem Ereignis, eine Nachvollziehbarkeit von dem Operator beim Eintreten eines Ereignisses zur Verfügung stehenden Informationen aus der Bedienung und Beobachtung ermöglicht.

Ein Ereignis, das zur automatisierten Erfassung und Speicherung des Zustandes der Visualisierung führen kann, ist bevorzugt eine auftretende Alarmmeldung oder eine bestimmte, von dem Operator getriggerte Änderung der Visualisierung des Operator Station Clients. Eine solche Änderung kann beispielsweise im Wechsel eines Anlagenbildes zu einem anderen Anlagenbild oder beim Öffnen eines alarmgebenden Objektes liegen. Ein Ereignis kann auch ein Öffnen eines Faceplates eines technischen Objektes der technischen Anlage, eine Parameteränderung eines technischen Objektes der technischen Anlage, ein Betriebszustand eines technischen Objektes der technischen Anlage, ein Erreichen eines bestimmten Zustandes einer von der technischen Anlage abzuarbeitenden Schrittfolge oder ein Erreichen eines bestimmten Gütekriteriums beim Betrieb der technischen Anlage darstellen.

Die Aufgabe wird zudem gelöst durch ein Verfahren zum Betreiben eines Leitsystems einer technischen Anlage, insbesondere Fertigungs- oder Prozessanlage, das wenigstens einen Operator Station Server und wenigstens einen Operator Station Client umfasst, wobei der Operator Station Server dazu ausgebildet, Visualisierungsinformationen an den Operator Station Client zu übertragen, und wobei der Operator Station Client dazu ausgebildet ist, anhand der Visualisierungsinformationen eine Visualisierung für einen Operator der technischen Anlage zu erzeugen, das Verfahren umfassend:
a) Beim Eintreten eines Ereignisses in der technischen Anlage automatisiertes Erfassung eines Zustandes der Visualisierung zu einem ersten Zeitpunkt,
b) Hinterlegen des Zustandes in einem Speicher des Leitsystems oder in einem cloudbasierten Speicher außerhalb des Leitsystems.

Die Aufgabe wird zudem gelöst durch ein Verfahren zum Betreiben eines Leitsystems einer technischen Anlage, insbesondere Fertigungs- oder Prozessanlage, das wenigstens einen Operator Station Server und wenigstens einen Operator Station Client umfasst, wobei der Operator Station Server dazu ausgebildet, Visualisierungsinformationen an den Operator Station Client zu übertragen, und wobei der Operator Station Client dazu ausgebildet ist, anhand der Visualisierungsinformationen eine Visualisierung für einen Operator der technischen Anlage zu erzeugen, das Verfahren umfassend:
a) Beim Eintreten eines Ereignisses in der technischen Anlage automatisiertes Erfassung eines Zustandes der Visualisierung zu einem ersten Zeitpunkt,
b) Hinterlegen des Zustandes in einem Speicher des Leitsystems oder in einem cloudbasierten Speicher außerhalb des Leitsystems.

Bei dem Verfahren kann der Zustand der Visualisierung in einem Speicher des Operator Station Servers hinterlegt werden.

Bevorzugt wird zu einem zweiten, von dem ersten verschiedenen Zeitpunkt der Zustand der Visualisierung aus dem Speicher abgerufen und die zu dem zweiten Zeitpunkt aktuell dem Operator durch den Operator Station Client dargebotene Visualisierung in den aus dem Speicher abgerufenen Zustand gebracht.

Dabei kann das Leitsystem den Abruf der Visualisierung aus dem Speicher und die Aktualisierung der Visualisierung zu dem zweiten Zeitpunkt auf eine Anforderung des Operators hin vornehmen.

Das Leitsystem kann den Abruf der Visualisierung auch aus dem Speicher und die Aktualisierung der Visualisierung zu dem zweiten Zeitpunkt automatisiert nach dem Ablauf einer bestimmten Zeitspanne vornehmen, wobei vorzugsweise das Leitsystem vor der Aktualisierung eine Abfrage an den Operator erzeugt, ob die Aktualisierung vorgenommen werden soll.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: eine grafische Darbietung einer technischen Anlage gemäß einem ersten Aspekt;
- FIG 2: eine grafische Darbietung einer technischen Anlage gemäß einem zweiten Aspekt;
- FIG 3: eine grafische Darbietung einer technischen Anlage gemäß einem dritten Aspekt; und
- FIG 4: ein erfindungsgemäßes Leitsystem in einer schematischen Darstellung.

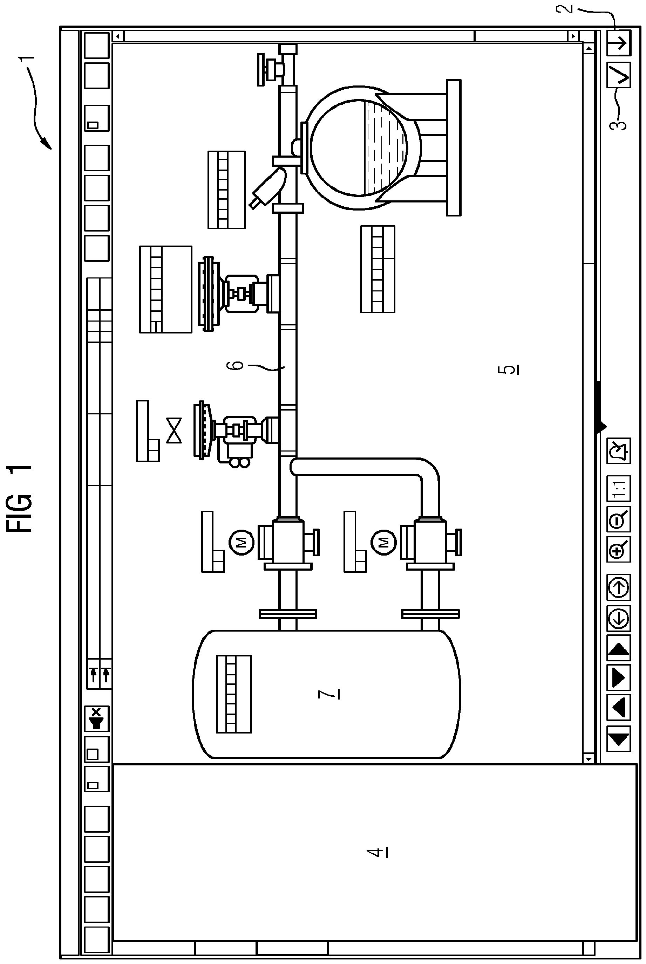

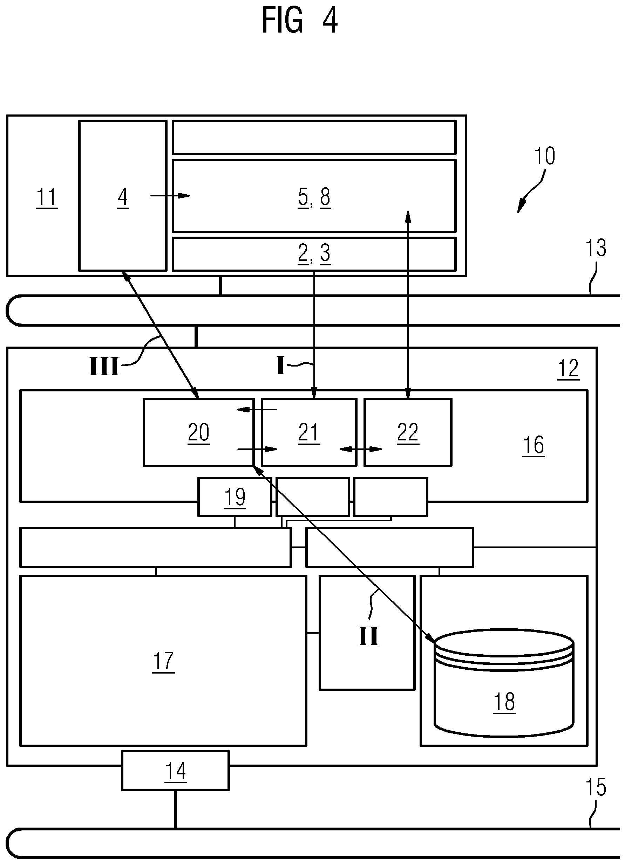

In FIG 1 ist eine Visualisierung 1 dargestellt, welche ein Operator Station Client (vgl. FIG 4) einem Operator einer Prozessanlage zur Bedienung und Beobachtung der Prozessanlage darbietet. In der rechten unteren Ecke der Visualisierung 1 sind ein erstes Auswahlfeld 2 und ein zweites Auswahlfeld 3 dargestellt. Durch die Anwahl des ersten Auswahlfeldes 2 (symbolisiert durch einen nach unten gerichteten Pfeil) kann der Operator manuell eine ad hoc Persistenz der Visualisierung 1 triggern. Dabei wird der Zustand der Visualisierung erfasst und in einem Speicher eines mit dem Operator Station Client verbundenen Operator Station Servers hinterlegt (zu technischen Details hierzu vgl. FIG 4).

Die von dem Operator angelegte Persistenz des Zustands der Visualisierung 1 wird dem Operator in einem Nutzerbereich 4 visuell dargestellt. Die Visualisierung 1 weist in FIG 1 den folgenden Zustand auf: Ein Anlagenbild 5 wird visuell dargestellt. Das Anlagenbild 5 weist grafische Repräsentationen von Rohrleitungen 6 und Prozessobjekten 7 wie einem Tank oder einem Kessel auf.

Der Operator kann durch Anwahl des zweiten Auswahlfeldes 3 alternativ oder zusätzlich auch eine automatisierte Erfassung des Zustandes der Visualisierung 1 beim Eintreten vorzugebender Ereignisse triggern. Vordefinierbare Ereignisse sind beispielsweise:
- Alarm Loop-Ins: Immer dann, wenn der Operator zur Behandlung eines Alarms über einen Alarm Loop-In einen Bildwechsel vollzieht;
- View Switches: Immer dann, wenn der Operator vom Operating View in einen Maintenance View oder einen Engineering View wechselt.

Nach der Behandlung des Ereignisses, beispielsweis einem auftretenden Alarm, kann der Operator mithilfe des zuvor erfassten und in dem Speicher hinterlegten Zustands der Visualisierung (es sind auch mehrere Zustände zu verschiedenen Zeitpunkten hinterlegbar) unterbrechungsfrei zu seiner vorherigen Tätigkeit zurückkehren, was die Bedienung und Beobachtung deutlich effizienter gestalten kann. Unterbrechungsfrei bedeutet dabei, dass nicht nur das vorherige Anlagenbild, sondern auch die darin geöffneten Bildfenster mit Position, wie auch die getätigten Eingaben ohne Bestätigung (z.B. einen neuen Stellwert eines Reglers eingegeben, ohne ihn zu bestätigen), wiederhergestellt werden - unabhängig davon, ob die ad hoc Persistenz manuell oder automatisiert erstellt wurde. Somit ist ein Operator in der Lage, Kontextwechsel zu vollziehen, z.B. wegen eines aufgetretenen Alarms, ohne den "Anschluss" zu seiner vorherigen Tätigkeit zu verlieren.

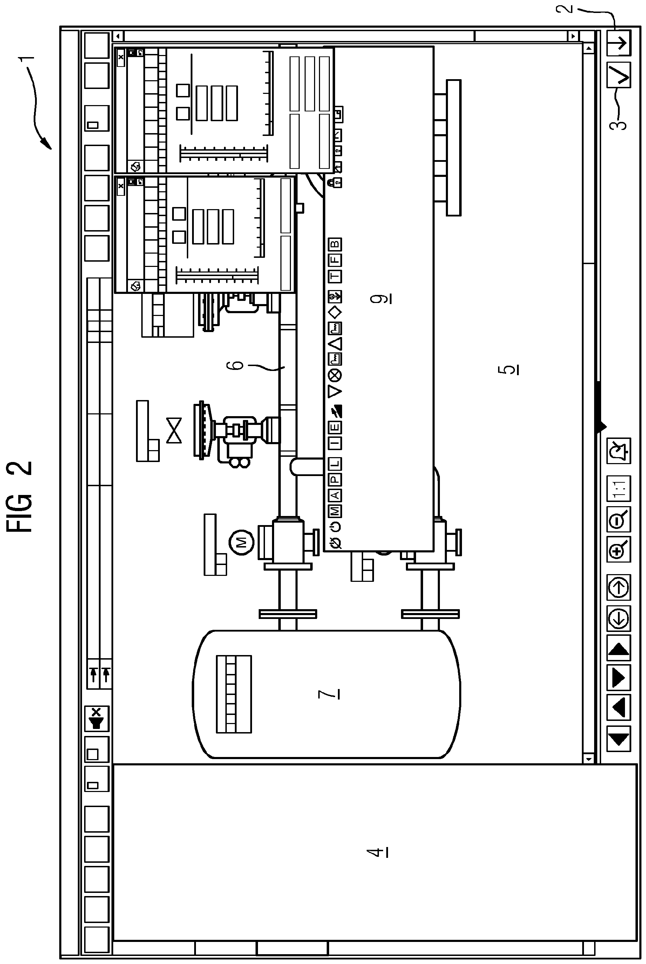

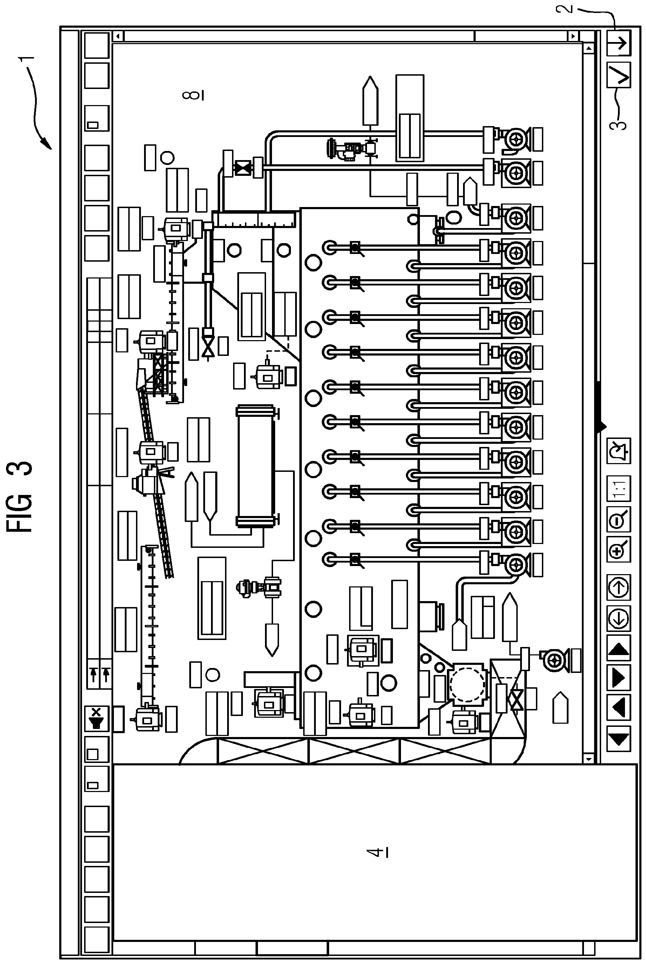

FIG 2 zeigt den Fall, dass in der Visualisierung 1 aus FIG 1 eine Alarmmeldung in einer Alarmmeldeanzeige 9 auftritt. Der Operator führ nun in der Regel einen sogenannten Loop-In durch, beispielweise durch das Anwählen der Alarmmeldung in der Alarmmeldeanzeige 9, um sich das für die Alarmmeldung relevante Anlagenbild 8 in der Visualisierung des Operator Station Clients darstellen zu lassen. Das weitere Anlagenbild 8, in das der Operator geführt wird, ist in FIG 3 dargestellt.

Will der Operator nach der Bearbeitung der Alarmmeldung zu der vorherigen oder einer weiteren Visualisierung zurückkehren, kann er dies durch die Anwahl eines dazugehörigen Elementes in dem Nutzerbereich 4, welcher im vorliegenden Ausführungsbeispiel unabhängig von dem daneben dargestellten Anlagenbild 5, 8 visualisiert wird. Um die unterschiedlichen Elemente im Nutzerbereich 4, d.h. die "ad hoc Persistenzen" besser unterscheiden zu können, kann der Operator nach deren Anlegen optional noch einen Kommentar vergeben. Wird ein Element im Nutzerbereich 4 nicht mehr benötigt, kann der Operator es aus der Anzeige des Nutzerbereichs 4 löschen. Es kann aber zu Nachverfolgungszwecken vorgesehen sein, dass die Informationen über die erfassten Zustände der Visualisierung im Speicher verbleiben (obwohl sie in dem Nutzerbereich 4 nicht mehr angezeigt werden).

In FIG 4 ist ein Leitsystem 10 für die Bedienung und Beobachtung der Prozessanlage schematisch dargestellt. Das Leitsystem 10 umfasst die zuvor bereits genannten Operator Station Client 11 und den Operator Station Server 12. Der Operator Station Server 12 und der Operator Station Client 11 sind über einen Terminalbus 13 miteinander und optional mit nicht dargestellten weiteren Komponenten des Leitsystems 10 wie einem Engineering Station Server oder einem Archivserver verbunden.

Ein Benutzer bzw. Operator kann zum Zwecke des Bedienens und Beobachtens über den Operator Station Client 11 mittels des Terminalbus 13 auf den Operator Station Server 12 zugreifen. Der Terminalbus 13 kann, ohne sich darauf zu beschränken, beispielsweise als Industrial Ethernet ausgebildet sein.

Der Operator Station Server 12 weist eine Geräteschnittstelle 14 auf, die mit einem Anlagenbus 15 verbunden ist. Über diese Geräteschnittstelle 14 kann der Operator Station Server 3 mit einem Automatisierungsgerät (nicht dargestellt) sowie mit optional vorhandenen weiteren Komponenten der verfahrenstechnischen Anlage wie Peripheriegeräten (nicht dargestellt) kommunizieren. Der Anlagenbus 15 kann, ohne sich darauf zu beschränken, beispielsweise als Industrial Ethernet ausgebildet sein.

Auf dem Operator Station Server 12 sind (unter anderem) ein Visualisierungsdienst 16, ein Prozessabbild 17 und ein Speicher 18 implementiert. Der in dem Operator Station Server 12 integrierte Visualisierungsdienst 16 initiiert eine Übertragung von Visualisierungsinformationen an den Operator Station Client 11. Der Operator Station Client 11 ist dazu ausgebildet, eine Visualisierung, d.h. eine grafische Darbietung, insbesondere von Anlagenbildern, zum Bedienen und Beobachten der Prozessanlage darzustellen.

In dem Prozessabbild 17 des Operator Station Servers 12 ist eine Momentaufnahme der (Signal-)Zustände von mit dem Operator Station Server 12 verbundenen Geräten und/oder Applikationen (in der Figur nicht dargestellt) hinterlegt. Ein Alarmdienst 19 kann Alarmmeldungen aus dem Prozessabbild 17 auslesen und beispielsweise eine grafische Aggregation der Alarmmeldungen erzeugen, die der Operator Station Client 12 darstellen kann.

Ein Benutzerauswahldienst 20 hat Zugriff auf den Speicher 18 des Operator Station Servers 12. Dort können Anwenderprofile und persönliche Einstellungen von Operatoren/Bedienern der Prozessanlage hinterlegt werden. Diese können auch für weitere Operatoren/Bediener zugänglich sein. Der Benutzerauswahldienstes 20 hat Zugriff auf den Nutzerbereich 4, in welchem, wie anhand der Figuren 1 bis 3 erläutert, in dem die von dem Operator manuell vorgegebenen oder bedingt durch Ereignisse automatisiert erfassten Zustände der Visualisierung aufgeführt sind.

Der Zustand der Visualisierung 1 wird wie folgt erfasst und in dem Speicher 18 hinterlegt:
Schritt I: Der Operator triggert, manuell über das erste Auswahlfeld 2 oder automatisiert über das zweite Auswahlfeld 3, die Erfassung des Zustandes der Visualisierung zu einem bestimmten (ersten) Zeitpunkt über den Operator Station Client 11. Dieser Trigger wird von einer Steuerungskomponente 21 des Operator Station Servers 12 erfasst. Die Steuerungskomponente 21 kennt den aktuellen Zustand der Visualisierung, da sie die hierzu nötigen Visualisierungsinformationen an den Operator Station Client 11 übertragen hat.
Schritt II: Der Benutzerauswahldienst 21 empfängt von der Steuerungskomponente 21 den aktuellen Zustand der Visualisierung und hinterlegt diesen in dem Speicher 18. Hierzu nutzt der Benutzerauswahldienst 21 einen für den aktuellen Operator reservierten Speicherbereich des Speichers 18.
Schritt III: Wenn der Operator den vorherigen Zustand der Visualisierung wiederherstellen möchte, triggert er (über den Nutzerbereich 4) den Benutzerauswahldienst 21, welcher den Zustand aus dem Speicher 18 abruft und über die Steuerungskomponente 21 an den Operator Station Client 11 überträgt, welcher den alten Zustand der Visualisierung wiederherstellt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitsystem (10) für eine technische Anlage, insbesondere Fertigungs- oder Prozessanlage, das wenigstens einen Operator Station Server (12) und wenigstens einen mit dem Operator Station Server verbundenen Operator Station Client (11) umfasst, wobei der Operator Station Server (12) dazu ausgebildet ist, Visualisierungsinformationen an den Operator Station Client (11) zu übertragen, und wobei der Operator Station Client (11) dazu ausgebildet ist, anhand der Visualisierungsinformationen eine Visualisierung (1) für einen Operator der technischen Anlage zu erzeugen,
**dadurch gekennzeichnet, dass**
das Leitsystem (10) dazu ausgebildet ist, zur Laufzeit der technischen Anlage einen Zustand der Visualisierung (1) zu einem ersten Zeitpunkt auf Veranlassung des Operators und/oder automatisiert bei einem Eintreten eines Ereignisses in der technischen Anlage zu erfassen und in einem Speicher (18) des Leitsystems (10) oder in einem cloudbasierten Speicher außerhalb des Leitsystems (10) zu hinterlegen.

2. Leitsystem (10) nach Anspruch 1, das dazu ausgebildet ist, den Zustand der Visualisierung (1) in einem Speicher (18) des Operator Station Servers (12) zu hinterlegen.

3. Leitsystem (10) nach Anspruch 1 oder 2, bei dem der Zustand der Visualisierung (1) eine zu dem ersten Zeitpunkt erfolgende grafische Wiedergabe eines Anlagenbildes (5, 8) der technischen Anlage, eine Trendanzeige eines Messwertes aus der technischen Anlage, eine nicht gesicherte Eingabe des Operators in einem Textfeld, einen von dem Operator eingestellten Stellwert eines Reglers und/oder eine Meldefolgeanzeige umfasst.

4. Leitsystem (10) nach einem der vorangegangenen Ansprüche, bei dem ein Ereignis eine auftretende Alarmmeldung oder eine bestimmte, von dem Operator getriggerte Änderung der Visualisierung (1) des Operator Station Clients (11) darstellt.

5. Leitsystem (10) nach einem der vorangegangenen Ansprüche, das dazu ausgebildet ist, zu einem zweiten, von dem ersten verschiedenen Zeitpunkt den Zustand der Visualisierung (1) aus dem Speicher (18) abzurufen und die zu dem zweiten Zeitpunkt aktuell dem Operator durch den Operator Station Client (11) dargebotene Visualisierung (1) in den aus dem Speicher (18) abgerufenen Zustand zu bringen.

6. Leitsystem (10) nach Anspruch 5, bei dem das Leitsystem (10) dazu ausgebildet ist, den Abruf der Visualisierung (1) aus dem Speicher (18) und die Aktualisierung der Visualisierung (1) zu dem zweiten Zeitpunkt auf eine Anforderung des Operators hin vorzunehmen.

7. Leitsystem (10) nach Anspruch 5, bei dem das Leitsystem (10) dazu ausgebildet ist, den Abruf der Visualisierung (1) aus dem Speicher (18) und die Aktualisierung der Visualisierung (1) zu dem zweiten Zeitpunkt automatisiert nach dem Ablauf einer bestimmten Zeitspanne vorzunehmen, wobei das Leitsystem (10) vorzugsweise dazu ausgebildet ist, vor der Aktualisierung eine Abfrage an den Operator zu erzeugen, ob die Aktualisierung vorgenommen werden soll.

8. Verfahren zum Betreiben eines Leitsystems (10) einer technischen Anlage, insbesondere Fertigungs- oder Prozessanlage, das wenigstens einen Operator Station Server (12) und wenigstens einen Operator Station Client (11) umfasst, wobei der Operator Station Server (12) dazu ausgebildet, Visualisierungsinformationen an den Operator Station Client (11) zu übertragen, und wobei der Operator Station Client (11) dazu ausgebildet ist, anhand der Visualisierungsinformationen eine Visualisierung (1) für einen Operator der technischen Anlage zu erzeugen, das Verfahren umfassend:
a) Entgegennehmen einer Anforderung des Operators, einen Zustand der Visualisierung (1) zu einem ersten Zeitpunkt zu erfassen,
b) Hinterlegen des Zustandes in einem Speicher (18) des Leitsystems (10) oder in einem cloudbasierten Speicher außerhalb des Leitsystems (10).

9. Verfahren zum Betreiben eines Leitsystems (10) einer technischen Anlage, insbesondere Fertigungs- oder Prozessanlage, das wenigstens einen Operator Station Server (12) und wenigstens einen Operator Station Client (11) umfasst, wobei der Operator Station Server (12) dazu ausgebildet, Visualisierungsinformationen an den Operator Station Client (11) zu übertragen, und wobei der Operator Station Client (11) dazu ausgebildet ist, anhand der Visualisierungsinformationen eine Visualisierung (1) für einen Operator der technischen Anlage zu erzeugen, das Verfahren umfassend:
a) Beim Eintreten eines Ereignisses in der technischen Anlage automatisiertes Erfassung eines Zustandes der Visualisierung (1) zu einem ersten Zeitpunkt,
b) Hinterlegen des Zustandes in einem Speicher (18) des Leitsystems (10) oder in einem cloudbasierten Speicher außerhalb des Leitsystems (10).

10. Verfahren nach Anspruch 8 oder 9, bei dem der Zustand der Visualisierung (1) in einem Speicher (18) des Operator Station Servers (12) hinterlegt wird.

11. Verfahren nach Anspruch 8 und 10 oder nach Anspruch 9 und 10, bei dem zu einem zweiten, von dem ersten verschiedenen Zeitpunkt der Zustand der Visualisierung (1) aus dem Speicher (18) abgerufen und die zu dem zweiten Zeitpunkt aktuell dem Operator durch den Operator Station Client (11) dargebotene Visualisierung (1) in den aus dem Speicher (18) abgerufenen Zustand gebracht wird.

12. Verfahren nach Anspruch 11, bei dem das Leitsystem (10) den Abruf der Visualisierung (1) aus dem Speicher (18) und die Aktualisierung der Visualisierung (1) zu dem zweiten Zeitpunkt auf eine Anforderung des Operators hin vornimmt.

13. Verfahren nach Anspruch 11, bei dem das Leitsystem (10) den Abruf der Visualisierung (1) aus dem Speicher (18) und die Aktualisierung der Visualisierung (1) zu dem zweiten Zeitpunkt automatisiert nach dem Ablauf einer bestimmten Zeitspanne vornimmt, wobei vorzugsweise das Leitsystem (10) vor der Aktualisierung eine Abfrage an den Operator erzeugt, ob die Aktualisierung vorgenommen werden soll.
